(19) Europäisches Patentamt
European Patent Office
Office européen des brevets

(11) Publication number: **0 002 273**
**A2**

# (12) EUROPEAN PATENT APPLICATION

(21) Application number: 78101514.4

(22) Date of filing: 01.12.78

(51) Int. Cl.²: C 08 F 10/00
C 08 F 4/02, C 08 F 4/22
C 08 F 4/78
//C08K9/00, B01D15/08

(30) Priority: 05.12.77 US 857552

(43) Date of publication of application:
13.06.79 Bulletin 79/12

(84) Designated contracting states:
BE DE FR GB IT SE

(71) Applicant: PHILLIPS Petroleum Company
Bartlesville, Oklahoma 74004(US)

(72) Inventor: Welch, Melvin Bruce
4716 Barlow Drive
Bartlesville Oklahoma(US)

(72) Inventor: McDaniel, Max Paul
1601 Melmart Drive
Bartlesville Oklahoma(US)

(74) Representative: Geissler, Bernhard, Dr.
Widenmayerstrasse 24
D-8000 München 22(DE)

## (54) Chromium catalyst, process for its production and use thereof in olefin polymerization.

(57) A support suitable for supporting chromium to produce a catalyst capable of giving high melt flow olefin polymers for such applications as injection molding and the like requiring a narrow molecular weight distribution, is produced by treating the support at an elevated temperature with either (1) CO, (2) a bromine component, or (3) an oxygen-containing sulfur component. Thereafter, anhydrous chromium can be added, for instance, by means of a hydrocarbon solution of a soluble chromium compound, and the resulting composition activated in air to produce a catalyst. The bromine treated silica is also suitable for use as a reinforcing agent in rubber or plastics and as a support for a chromatographic column.

EP 0 002 273 A2

Croydon Printing Company Ltd.

# CHROMIUM CATALYST, PROCESS FOR ITS PRODUCTION AND USE THEREOF IN OLEFIN POLYMERIZATION

This invention relates to the preparation of treated silica.

Chromium oxide catalysts on a silica-containing support can be used to prepare olefin polymers in a hydrocarbon solution to give a product having excellent characteristics from many standpoints. Supported chromium oxide catalysts can also be used to prepare olefin polymers in a slurry system wherein the polymer is produced in the form of small particles of solid material suspended in a diluent. This process, frequently referred to as a particle-form process, has the advantage of being less complex. However, certain control operations which are easily carried out in the solution process are considerably more difficult than the particle-form process. For instance, in a solution process, control of the molecular weight can be effected by changing the temperature with lower molecular weight (higher melt flow) being obtained at the higher temperatures. However, in the slurry process, this technique is inherently limited since any effort to increase the melt flow to any appreciable extent by

increasing temperature would cause the polymer to go into solution and thus destroy this slurry or particle-form process.

Summary of the Invention

It is an object of this invention to provide a catalyst capable of giving high melt flow polymer; it is a further object of this invention to provide a catalyst suitable for use in slurry polymerization systems; it is a further object of this invention to produce an improved support for chromium-containing catalysts, it is a further object of this invention to provide an improved method of producing a chromium-containing catalyst; and it is yet a further object of this invention to provide a catalyst capable of giving polymer suitable for injection molding and other applications requiring high melt flow and narrow molecular weight distribution; and it is yet a further object of this invention to produce a bromine containing silica composition.

In accordance with this invention, a silica-containing composition is treated at an elevated temperature with an ambient selected from (1) carbon monoxide, (2) a bromine-containing component or (3) an oxygen-containing sulfur-containing component.

Description of the Preferred Embodiments

The silica-containing support can be selected from catalytic grade silica, silica-alumina, silica-boria, silica-titania, silica-zirconia, and the like, and mixtures thereof, in which the silica constitutes from 80 to 100 weight percent of the support. Such supports are broadly disclosed in Hogan et al, U. S. 2,825,721 (March 4, 1958), the disclosure of which is hereby incorporated by reference. Preferably, the support is a cogel, that is, a silica produced by coprecipitating titanium and silica as disclosed in Dietz, U. S. 3,887,494 (June 3, 1975), the disclosure of which is hereby incorporated by reference. For instance, this cogel formation can be carried out by adding a

titanium compound to a mineral acid, introducing an alkali metal silicate into the acid containing said titanium compound to form a hydrogel, aging the hydrogel for a time of greater than 1 hour, washing the thus aged hydrogel to produce a substantially alkali metal free hydrogel, forming a mixture comprising the thus washed hydrogel and a normally liquid oxygen-containing water soluble organic compound, and separating said organic compound and water from said mixture to form a xerogel. The titanium is present in these cogels in an amount within the range of 0.1 to 10, preferably 0.5 to 5 weight percent titanium based on the weight of the dried cogel (xerogel).

The treating agents are (1) carbon monoxide, (2) bromine or bromine-containing ambients and (3) an oxygen-containing sulfur composition preferably containing an organic sulfur compound.

In the first embodiment utilizing carbon monoxide, the ambient can be pure carbon monoxide or carbon monoxide in admixture with an inert gas such as nitrogen, argon, helium, etc. In such mixtures, the carbon monoxide content usually ranges from about 1 to 90 mole percent.

In the second embodiment wherein a bromine-containing material is utilized, bromine vapor itself can be used either alone or in combination with air or CO, preferably CO. Other suitable bromine-containing materials are HBr, and organic bromides like $CH_3Br$ which can be used alone or with bromine vapor. Generally, bromine or the bromine-containing compound constitutes from 0.01 to 10 mole percent of the mixture, and more preferably from about 0.1 to about 5 mole percent. Sufficient bromine is used during the contacting process whether in the form of bromine or a bromine-containing compound such as HBr by regulating its concentration or length of contacting time such that a weight ratio of support to bromine ranging from about 100:1 to about 0.5:1 is employed.

This second embodiment produces a novel composition of matter definable without resort to the method of manufacture. When the silica-containing material

is heated to an elevated temperature in CO as defined herein and contacted with $Br_2$, the $Br_2$ is visibly absorbed onto the silica. It does not come off at 1600°F (871°C) in CO or $N_2$. The reaction is postulated to be with surface silanol groups as follows:

$$\equiv Si - OH + CO + Br_2 \longrightarrow \equiv SiBr + CO_2 + HBr.$$

The composition can contain from 0.01 to 20 preferably 3 to 10 weight percent Br based on the weight of silica. This composition can be used as a reinforcing agent for rubber and plastics, or a chromatography support or the surface bromide can be burned off and the composition is a superior support for chromium to produce an olefin polymerization catalyst.

In the third embodiment wherein a sulfur-containing material is utilized, it is preferred that there be present sulfur, oxygen and carbon. Accordingly, mixtures of a sulfur-containing compound, such as carbon disulfide, and an oxygen-containing compound, such as a carboxylic acid or an alcohol, can be used. Most preferred is carbonyl sulfide since it contains both oxygen, sulfur and in addition carbon. Other exemplary sulfur-containing compounds include carbon monosulfide, carbon subsulfide, methanethiol, 2-methyl-1-propanethiol, eicosanethiol, benzenethiol, para-benzenedithiol, thiophene, thiophene-2-thiol, 1,2,3-propanetrithiol, dimethylsulfide, diethylsulfide, diphenylsulfide, benzylphenylsulfide, dimethylsulfide, di-4-tolyldisulfide, 2,2'-dinaphthyl disulfide, triethyltrisulfide, and the like. Generally, a weight ratio of supported catalyst to organic sulfur compound ranging from about 100:1 to about 0.1:1, more preferably from about 20:1 to 2:1 have been found suitable for this purpose.

Suitable alcohols for use in conjunction with the sulfur-containing materials include saturated and unsaturated aliphatic and aromatic alcohols with boiling points of about 300°C or less as a matter of convenience. Particularly preferred alcohols from an economic standpoint and ready availability are methanol and isopropanol.

Suitable carboxylic acids for this purpose include saturated and unsaturated compounds which are normally liquid as a matter of convenience. A fatty acid, particularly acetic acid, is presently preferred because of ready availability and low cost.

The alcohol or acid if used can be used in an amount so as to give a mole ratio of the sulfur-containing material to the alcohol or acid within the range of 0.1:1 to 10:1.

These treatments are carried out at a temperature within the range of 500-1000°C, preferably 750-925°C. The time for this treatment is at least 5 minutes, preferably 20 minutes to 10 hours, more preferably 2 to 8 hours. Shorter times, of course, are generally employed at the higher temperatures and longer times at the lower temperatures. Two to 8 hours are especially preferred times for reduction temperatures in the range of 750-925°C, for instance.

After the treatment, if the agent is a bromine-containing material, a surface bromide compound is formed and it is essential that the material be given a treatment in air or other oxygen-containing ambient to burn off surface bromide if it is to be impregnated with chromium to form a catalyst. With the CO or sulfur treatment, this oxidizing treatment is preferred but not essential since a similar surface compound is not formed. This oxidizing treatment is carried out by simply heating the bromine-treated support in a dry oxygen-containing ambient, for instance, air at a temperature ranging from about 300-1000°C, preferably about 525-925°C, for a time ranging from 10 minutes to 10 hours, more preferably from 1 to 5 hours. Bromine gas is released from the catalyst during this step, and is replaced by oxide groups, leaving an improved catalyst support.

The support after the reducing treatment and the subsequent oxidation, if employed, is then cooled and the chromium added without the introduction of

water. Suitable chromium compounds are selected from diarene chromium compounds as described in Delap, U. S. 3,976,632 (December 4, 1974), the disclosure of which is hereby incorporated by reference; alkyl or aryl esters of chromic acid and chromium acetylacetonate as described in Hill, U. S. 3,349,067 (October 24, 1967), the disclosure of which is hereby incorporated by reference. Bis-(cyclopentadienyl)chromium(II) compounds as described in Karpinka, U. S. 3,709,853 (January 9, 1973), the disclosure of which is hereby incorporated by reference and silyl chromates as described in Johnson, U. S. 3,704,287 (November 28, 1972), the disclosure of which is hereby incorporated by reference. Generally, a solution or a slurry of the chromium compound in a dry organic liquid inert to the compound and support is used to contact the treated support. Examples of suitable organic liquids include paraffins such as n-heptane, cycloparaffins such as cyclohexane and aromatic hydrocarbons such as benzene. Following the contacting, the composite is dried. Sufficient chromium is used to give 0.001 to 10, preferably 0.1 to 5, more preferably 0.5 to 1 weight percent based on the weight of the silica-containing base.

The composite after incorporation of the chromium compound is then activated in a manner conventional in the art for the particular type of chromium compound used. Preferably, the composite is activated by contact with an oxygen-containing ambient such as air at temperatures ranging from about 25-870°C, preferably 315-760°C, more preferably 300-400°C for sulfur-treated supports, 300-500°C for bromine-treated supports, and 400-600°C for CO-treated supports. As noted, the preferred ambient is air. However, any oxygen-containing ambient having from 2-100% oxygen and from 0-98% of an inert gas such as nitrogen can be used. In some instances, it is desirable to use a controlled smaller amount of oxygen by utilizing a nitrogen-air mixture. It is also possible, though much less preferred, to activate the $\pi$-bonded organochromium

compounds, particularly the dicyclopentadienyl chromium(II) compounds in an inert atmosphere such as nitrogen for the same times and temperatures used with oxygen. Following the activation, the catalysts are cooled, if necessary, and stored in a dry, inert atmosphere until ready for use. $NO_2$, $N_2O$ and oxygen-containing halogen compounds can also be used as the oxidizing agent. Suitable oxygen-containing halogen compounds are $I_2O_5$ and $Cl_2O$.

The activation times will generally be at least 5 minutes, preferably 10 minutes to 10 hours, more preferably 30 minutes to 3 hours. The concentration of the chromium compound is such that the final activated catalyst contains from 0.001 to 10 preferably 0.1 to 5, more preferably about 1 weight percent chromium based on the weight of the chromium compound and support.

The catalysts of this invention can be used to polymerize at least one mono-1-olefin containing 2 to 8 carbon atoms per molecule. The invention is of particular applicability in producing ethylene homopolymers and copolymers from mixtures of ethylene and 1 or more comonomers selected from 1-olefins or dienes containing 3 to 8 carbon atoms per molecule. Exemplary comonomers include aliphatic 1-olefins, such as propylene, 1-butene, 1-hexene, and the like and conjugated or nonconjugated diolefins, such as 1,3-butadiene, isoprene, piperylene, 2,3-dimethyl-1,3-butadiene, 1,4-pentadiene, 1,7-hexadiene, and the like and mixtures thereof. Ethylene copolymers preferably constitute about 90, preferably 95 to 99 mole percent polymerized ethylene units. Most preferred monomers are at least one of ethylene, propylene, 1-butene, and 1-hexene.

The polymers can be prepared from the activated catalysts of this invention by solution polymerization, slurry polymerization, and gas phase polymerization techniques using conventional equipment and contacting processes. However, the catalysts of this invention are particularly suitable in slurry polymerizations for the production of high melt index (MI) polymers, i.e. poly-

mers having MI values in the 1 to 15 range and above at 102°C polymerization temperature in the absence of molecular weight modifiers, such as hydrogen, and molecular weight distribution value sufficiently narrow to be of commercial interest for applications such as injection molding. For example, ethylene homopolymers exhibiting a melt index in the 1 to 15 range can be obtained by contact with the catalyst of this invention, whereas otherwise identical catalyst using a base conventionally prepared yield fractional MI polymers, i.e. polymer of a MI of less than 1 at a reactor temperature of 102°C. At higher reactor temperatures, higher MI and lower HLMI ratio values are obtained. Thus, for a comparison between a control run and an invention run to be valid they must be at the same polymerization temperature. At a reactor temperature of 110°C, polymers of 15 to 35 MI and higher can be produced as compared with polymers of 5 to 6 maximum MI without the treatment of the support set out in this invention. The high MI polymers made at 110°C reactor temperature have HLMI/MI (high load MI/regular MI) values ranging from about 33 to 38 with $M_w/M_n$ ratios of about 4. $M_w$ is weight average molecular weight, $M_n$ is number average molecular weight; these values can be determined by means of GPC. Such resins can be injection molded in conventional apparatus to form tough, low warpage articles.

As can be seen, in order for a fair comparison to be made, it must be done between an invention run and a control run carried out at the same polymerization temperature. Higher melt flow and better molecular weight distribution as evidenced by lower HLMI/MI ratios are obtained at the higher temperatures. However, as is noted hereinabove, there is a practical limit to the maximum temperature which can be utilized in a particle-form process. The runs herein were carried out at a relatively low temperature simply because of the greater ease of measuring the melt index values at the lower levels. Actually, polymer

ization is generally carried out in conventional systems at the highest temperature possible without putting the polymer into solution so as to get the highest possible melt index. However, with this invention, polymerization at this temperature produced such high melt index polymer that it was difficult to measure and hence lower polymerization temperatures were generally used.

Particle form polymerizations are carried out in an inert diluent such as a paraffin, aromatic or cycloparaffin hydrocarbon at a temperature where the resulting polymer is insoluble. For predominantly ethylene polymer, the particle form process is carried out at a temperature of 66-110°C.

The catalysts of this invention can be used with conventional cocatalysts if desired. Also, hydrogen can be used to further increase the MI if desired.

Example 1 (Embodiment 1)

Samples of a dried, coprecipitated silica-titania cogel prepared as described in said U. S. 3,887,494, were heated in a fluidized bed quartz activator in an atmosphere of either pure, dry carbon monoxide or dry air for 4 hours at 1600°F (870°C). Gas flow rate was 42 liters per hour in each instance. Following this treatment, individual portions of the CO-treated support and the air-treated support were impregnated with a 1 weight percent solution of dicumene chromium n-hexane sufficient to obtain composites each containing either 0.5 or 1 weight percent of the chromium compound calculated as chromium, based on the dry weight of support plus chromium compound. Several catalyst samples were also prepared by impregnation of the CO-treated support as described above with a 1 weight percent solution of t-butyl chromate in n-hexane sufficient to provide 0.5 weight percent chromium on a dry basis. Each composite was dried to remove solvent and each was charged to the activator, unless otherwise indicated, under specified temperatures for 2 hours for activation. Samples of each

recovered catalyst were used in the particle form polymerization of ethylene at 215°F (102°C).

The treating conditions employed and polymer melt index (MI) values obtained are presented in Table I. A column is also included for the ratio of high load melt index/melt index (HLMI/MI) determined for each polymer. The ratios are related to molecular weight distribution of the polymer, the smaller the number, the narrower the molecular weight distribution. Each MI value is adjusted for a productivity value of 5000 g polymer/g catalyst to give a true basis for comparing results.

Table I

Effect Of Support Pretreatment According To Embodiment 1 On Polymer Melt Index

| Run[1] No. | Support Pretreatment Ambient | Wt. % Chromium In Catalyst | 2 Hour Air Activation °F | °C | Polymer MI | HLMI/MI |
|---|---|---|---|---|---|---|
| 1[2] | air | 0.5 | 80 | 27 | 0.74 | 42 |
| 2 | air | 0.5 | 600 | 316 | 0.74 | 61 |
| 2a | CO | 0.5 | 600 | 316 | 1.5 | 54 |
| 3 | air | 0.5 | 800 | 427 | 0.88 | 58 |
| 3a | CO | 0.5 | 800 | 427 | 2.2 | 58 |
| 4a | CO | 0.5 | 900 | 482 | 2.9 | 50 |
| 5 | air | 0.5 | 1000 | 538 | 1.2 | 51 |
| 5a | CO | 0.5 | 1000 | 538 | 2.8 | 55 |
| 6 | air | 0.5 | 1200 | 649 | 0.87 | 61 |
| 6a | CO | 0.5 | 1200 | 649 | 3.1 | 55 |
| 7a | CO | 0.5 | 1300 | 704 | 1.8 | 52 |
| 8 | air | 0.5 | 1400 | 760 | 0.55 | 67 |
| 8a | CO | 0.5 | 1400 | 760 | 1.2 | 57 |
| 9 | air | 0.5 | 1600 | 871 | 0.56 | 78 |
| 9a | CO | 0.5 | 1600 | 871 | 0.89 | 61 |
| 10a[3] | CO | 0.5 | 800 | 427 | 2.1 | 54 |
| 11a[3] | CO | 0.5 | 1000 | 538 | 2.7 | 49 |
| 12[3] | air | 1 | 600 | 316 | 1.3[4] | 84 |
| 12a | CO | 1 | 600 | 316 | 4.6 | 67 |

**Notes:** (1) All runs with subscript a are invention runs.

(2) Catalyst was treated with 0.5 mole oxygen per mole chromium at 80°F for activation.

(3) Chromium compound used in preparing catalyst in runs 10a, 11a and 12 was t-butyl chromate. All other catalysts made with dicumene chromium.

(4) Reactor temperature employed was 212°F. All other runs employed 215°F.

The runs in Table I have been grouped to show how the support pretreatment conditions employed affect the melt index of polyethylene produced with catalysts prepared from the treated supports and activated under the same conditions. Thus, control run 2 shall be compared with invention run 2a, control run 3 with invention run 3a, and the like. In comparing those runs, it can be seen that pretreating the support in carbon monoxide has a beneficial effect on the melt index capability of catalyst prepared from such support. Thus, the melt index capability has increased from about 1.6-fold in runs 9 vs. 9a up to about 3.6-fold in runs 6 vs. 6a in which near optimum conditions appear to be realized. A comparison of runs 3a with 10a and 5a with 11a show that catalysts prepared with dicumene chromium and t-butyl chromate are substantially equivalent in performance based on the melt index values of the polymers made with the catalysts. However, the HLMI/MI values of the polymers are somewhat higher with catalysts prepared with dicumene chromium rather than with t-butyl chromate. This suggests that somewhat broader molecular weight distribution polymer may be made with catalysts prepared with diarene chromium compounds in comparison to those made with chromic acid esters.

The effect of increasing the amount of chromium from 0.5 weight percent to 1 weight percent on catalysts otherwise identical in preparation is

illustrated in runs 2a and 12a, respectively. Thus, in this instance, doubling the chromium concentration resulted in about a 3-fold increase in polymer melt index.

Example 2 (Embodiment 2)

Another series of catalysts was prepared from samples of the cogel support of Example 1 which were separately pretreated in various ambients in the fluidized bed activator used before. After the pretreatment, each support was cooled, recovered and impregnated with a 1% solution of dicumene chromium in n-hexane sufficient to give 0.5 weight percent chromium based on the dry weight of the composite. Each sample after drying was reheated in the activator for 2 hours at 600°F in dry air, cooled, recovered and stored in a dry inert atmosphere until ready for use. As in Example 1, the flow rate of gas in the activator employed was 42 liters per hour in each run.

Ethylene was polymerized under particle form conditions employing a reactor temperature of 215°F (102°C).

The pretreating conditions employed and polymer MI and HLMI/MI results obtained are given in Table II.

Table II

Effect Of Halogenated Support Pretreatment According To Embodiment 2

| | Support Pretreatment | | | | Polymer | | |
|---|---|---|---|---|---|---|---|
| Run No. | Ambient 1 | °C | Ambient 2 | °C | MI | HLMI/MI | Remarks |
| 1(1) | air | 871 | - | - | 0.75 | 61 | control |
| 2(2) | CO | 871 | - | - | 1.5 | 54 | (Embodiment 1) |
| 3(3) | CO + $Br_2$ | 649 | $N_2$, air | 871 | 3.9 | 80 | (Embodiment 2) |
| 4(4) | CO + $Br_2$ | 871 | air | 871 | 11.5 | 56 | (Embodiment 2) |
| 5 | air + $Br_2$ | 871 | - | - | 1.7 | 73 | (Embodiment 2) |
| 6(5) | air + $CCl_4$ | 871 | - | - | - | - | dead catalyst |
| 7 | CO + $Br_2$ | 871 | - | - | 0.1 | 71 | almost dead |

0002273



**Notes:** All supports were brought up to 871°C in dry air before treating with the other ambients. The air was purged with nitrogen before admitting CO to the activator in runs 2-4.

(1) Support was heated for 4 hours in air at 871°C.

(2) Support was heated for 4 hours in CO at 871°C.

(3) After contact with the bromine-CO mixture at 649°C, the temperature was raised to 871°C while switching to nitrogen and held for 2 hours in nitrogen at 871°C. Then the nitrogen was replaced with dry air and the support heated in air for 2 hours at 871°C.

(4) After contact with the bromine-CO mixture at 871°C, the support was heated in pure CO for 1 hour at 871°C, the CO flushed out with $N_2$ then the support was heated in air at 871°C for 2 hours.

(5) Weight ratio of support to $CCl_4$ was about 14:1. Since $CCl_4$ decomposes to $Cl_2$ + C under the conditions employed, a calculated weight ratio of support to $Cl_2$ was about 15:1 in this run.

Inspection of the results in Table II show in runs 2, 3 and 4 that pretreating the support in a mixture of CO and bromine which is then treated with air and finally converted into catalyst improves the melt index capability of that catalyst beyond that resulting from a CO pretreatment alone. In addition, runs 2 and 5 demonstrate that pretreating the support in a mixture of air and bromine is about equivalent to pretreating it in CO based on the melt index capability of catalysts prepared from the thus treated supports.

Analysis has shown that a surface bromide is formed when the support is bromine treated at high temperature. This bromide complex is itself injurious to the polymerization process, as in run 7. However, when the surface bromide is burned off by a high temperature air treatment (runs 3-4-5), $Br_2$ gas can be seen leaving the catalyst and the final result is a greatly improved polymerization catalyst support.

Example 3 (Embodiment 2)

A cogel similar to that used in Examples 1 and 2 containing 2 weight percent titanium was heated in nitrogen to 871°C. It was then treated with HBr for 1/2 hour at 871°C and then in air at 871°C for 1/2 hour, then nitrogen for 3-1/2 hours at 871°C, and then air for 1 hour at 871°C and cooled to room temperature. It was then impregnated with chromium as in the previous examples and oxidized in air for 2 hours at 648°C. Polymerization runs were carried out as before at 107°C. The resulting ethylene polymer had a melt index of 15, HLMI/MI ratio of 34 and a productivity of 5590 g polymer/g catalyst. The induction time was 15 minutes and the run time 31 minutes. In a control run, the same type of cogel without the HBr treatment was treated with chromium acetate to give 1 percent chromium and activated in air at 871°C for 5 hours. On polymerization of ethylene under the same conditions as above, the resulting polymer had a melt index of 2.8 and a HLMI/MI ratio of 50, and a productivity of 5620 g polymer/g catalyst and an induction time of 25 minutes and a run time of 75 minutes.

This shows better than a fivefold increase in melt index and a drastic lowering of the HLMI/MI ratio utilizing the treatment of the support set out herein. In both the invention run and the control run, the activation of the catalyst and the subsequent polymerization conditions were identical and conventional, the entire improvement being attributable to the pretreatment of the base prior to incorporation of the chromium.

Example 4 (Embodiment 2)

A sample of 10.6 grams of silica-titania cogel containing about 2 weight percent titanium and no chromium was heated in air to 871°C, held in carbon monoxide at 871°C for 2 hours, and thereafter 1/2 cc bromine was injected. The catalyst was reoxidized in air at 316°C for 1 hour. The catalyst was found

to contain 3.3 weight percent bromine based on the weight of the cogel. In another example, the catalyst was found to contain 8.3 weight percent bromine based on the weight of the cogel. When these catalysts were treated with air at 871°C, $Br_2$ could be seen leaving the silica and analysis showed the catalyst to contain no bromine. When $Br_2$ was injected into an air atmosphere in presence of the support, no bromine was found on the catalyst. The bromine does not come off at 871°C in carbon monoxide or nitrogen.

Example 5 (Embodiment 3)

Silica-titania cogel containing about 2 percent titanium was treated with carbonyl sulfide. In some instances, the support was then reoxidized and in other instances it was not. Thereafter, the support was impregnated with a dry hexane solution of dicumene chromium to give about 0.5 weight percent chromium based on the weight of the cogel. The results are shown hereinbelow in Table III.

## Table III

### Sulfur Treatment Of Cogel Support

| Run No. | Support Pretreatment | Support Reoxidation | Final Reoxidation | Color | Run Temp. | MI | HLMI/MI | Run Time | Prod. |
|---|---|---|---|---|---|---|---|---|---|
| 1 | 15% COS/870°C/1 hr. | None | 315°C/1 hr. | Orange Tan | 102°C | 55 | 42.3 | 34 | 5700 |
| 2 | 15% COS/870°C/1 hr. | None | 480°C/1 hr. | Orange | 107°C | 65 | 37.5 | 33 | 5060 |
| 3 | 15% COS/870°C/1 hr. | 540°C/1 hr. | 315°C/1 hr. | Orange Tan | 102°C | 87 | - | 30 | 4460 |
| 4 | 15% COS/870°C/1 hr. | 540°C/1 hr. | 480°C/1 hr. | Orange | 102°C | 27 | 46.1 | 27 | 6350 |
| 5 | 15% COS/870°C/1 hr. | 540°C/1 hr. | 650°C/1 hr. | Orange | 102°C | 9.7 | 50.7 | 34 | 5160 |
| 6 | 15% COS/870°C/1 hr. | 870°C/1 hr. | 315°C/1 hr. | Orange Tan | 102°C | 84 | - | 41 | 5160 |
| 7 | 15% COS/870°C/1 hr. | 870°C/1 hr. | 480°C/1 hr. | Orange | 102°C | 19.2 | 50.0 | 32 | 5120 |
| 8 | 15% COS/870°C/1 hr. | 870°C/1 hr. | 650°C/1 hr. | Orange | 102°C | 12.5 | 39.7 | 33 | 4590 |

As control runs, cogel base with no chromium was calcined in air at 870°C for 4 hours, then impregnated with 0.5 weight percent chromium as dicumene chromium in hexane. The catalysts were then reoxidized as indicated hereinbelow in Table IV for 2 hours in air. The results are shown hereinbelow.

Table IV

Anhydrous Promotion of Air Activated Cogel Base

| Run No. | Reoxidation Temp. | Color | MI | HLMI/MI | Run Time | Prod. |
|---|---|---|---|---|---|---|
| 1 | 25°C | yellow green | no go | | | |
| 2 | 25°C (A) | green | 0.74 | 42 | 146 | 5500 |
| 3 | 160°C | olive | no go | | | |
| 4 | 315°C | orange | 0.74 | 61 | 53 | 4810 |
| 5 | 315°C (B) | orange | 1.3 | 46 | 70 | 5210 |
| 6 | 425°C | orange | 0.88 | 58 | 45 | 5030 |
| 7 | 540°C | orange | 1.2 | 51 | 40 | 5470 |
| 8 | 650°C | orange | 0.87 | 61 | 42 | 4870 |
| 9 | 760°C | orange | 0.55 | 67 | 33 | 4970 |
| 10 | 870°C | orange | 0.56 | 78 | 40 | 5430 |

Polymerization was done at 102°C and 550 psig ethylene. All MI values have been corrected to 5000 gm/gm productivity.

(A) 0.5 mole $O_2$/mole Cr injected into a $N_2$ stream.

(B) Run at 105°C.

As can be seen, much improved melt index values are obtained utilizing the invention as set out in the data from Table III. Indeed, the improvement for embodiment 3 is not only greater than the control runs from Table IV but also superior to the results as shown in embodiments 1 and 2. As can be seen, melt index values ranging from 0.5 to 1.2 are obtained with the control compared with values ranging from 1.2 to 11-1/2 for embodiments 1 and 2; however, values ranging up to 87 are obtained with embodiment 3.

In embodiment 3, the preferred reoxidation temperature is lower than the preferred temperature in embodiments 1 and 2.

In comparing runs 1, 3 and 6 of Table III, each catalyst being reoxidized at 315°C for 1 hour, it is seen that melt index potential of the catalyst is increased by reoxidizing the treated support at an elevated temperature, i.e. 540 to 870°C, prior to impregnation with the Cr compound. On the other hand, the preferred reoxidation temperature employed for the catalyst is about 315°C. As the final reoxidation temperature exceeded 315°C, the melt index of polymer produced with that catalyst decreased, i.e. 87 for run 3 at 315°C, 27 for run 4 at 480°C and 9.7 for run 5 at 650°C. (Run 2 is higher than run 1 because it is the only one run at a higher reactor temperature).

Unlike in the bromine treatment, analysis of the sulfur treated catalyst bases shows that no sulfur is left behind on the support. That is, immediately after the treatment with, say carbonyl sulfide, the material can be cooled and analyzed and no sulfur is found on the support.

While this invention has been described in detail for the purpose of illustration, it is not to be construed as limited thereby but is intended to cover all changes and modifications within the spirit and scope thereof.

# CLAIMS

1. A process for producing an olefin polymerization catalyst by incorporating a chromium compound into a silica-containing support characterized by contacting at an elevated temperature said silica-containing support prior to said incorporating of said chromium compound with a treating ambient selected from
   (1) carbon monoxide
   (2) a bromine-containing component or
   (3) an oxygen and sulfur-containing component.

2. A process in accordance with claim 1) characterized in that said bromine-containing component is selected from the group consisting of bromine, HBr, a mixture of bromine and air, and a mixture of bromine and carbon monoxide, and that said oxygen and sulfur-containing component is carbonyl sulfide.

3. A process in accordance with claims 1) or 2) characterized in that said support is preoxidized by subjecting it to oxidation conditions after said contacting of said support with said treating ambient but prior to said incorporating of said bhromium compound.

4. A process in accordance with one of the preceding claims characterized in that said silica-containing support is a coprecipitated silica-titania cogel.

5. A process in accordance with one of the preceding claims characterized in that said treating ambient is gaseous.

6. A process in accordance with one of the preceding claims characterized in that a $\pi$-bonded organochromium compound, an ester of chromic acid or chromium acetylacetonate is incorporated by means of an inert liquid hydrocarbon as diluent or solvent and under essentially anhydrous conditions into said silica-containing support.

7. A process according to claim 3) characterized in that said support is a silica-titania cogel containing about 2 weight per cent titanium, said elevated temperature is within the range of 750-925° C., said chromium compound is tertiary butyl chromate or dicumene chromium and is employed in normal hexane, said preoxidation is carried out at a temperature within the range of 525-925° C., and said chromium-containing catalyst is activated by heating it in air at a temperature within the range of 300-675° C.

8. A catalyst prepared in accordance with a process of any of the preceding claims followed by an activation in a free oxygen-containing gas.

9. A process for polymerizing one or more olefins having 2 to 8 carbon atoms in the presence of a chromium/silica-containing catalyst, characterized in that a catalyst as defined in claim 8) is used.

10. A silica composition characterized by the fact that it consists essentially of silica or silica-titania-cogel with 0.01 to 20 weight per cent Br incorporated therein.